# EUROPÄISCHE PATENTSCHRIFT

(11) **EP 0 812 867 B1**
(45) Veröffentlichungstag und Bekanntmachung des Hinweises auf die Patenterteilung: **20.08.2003**
(21) Anmeldenummer: 97109067.5
(22) Anmeldetag: 05.06.1997
(51) Int. Cl.: C08G 18/78, C09D 133/06

(54) **Verfahren zur Lackierung von Substraten**
Process for lacquering substrates
Procédé pour le revêtement de substrats

(30) Priorität: 12.06.1996 DE 19623370
(43) Veröffentlichungstag der Anmeldung: 17.12.1997
(73) Patentinhaber: E.I. DU PONT DE NEMOURS AND COMPANY, Wilmington Delaware 19898 (US)
(72) Erfinder: Schubert, Walter, Dr., 42349 Wuppertal (DE); Dücoffre, Volker, 42119 Wuppertal (DE); Tännert, Klaus, 42389 Wuppertal (DE)
(74) Vertreter: Gille Hrabal Struck Neidlein Prop Roos

(56) Entgegenhaltungen:
- EP-A- 0 604 922
- WO-A-95/30663
- US-A- 4 939 213

## Beschreibung

Die Erfindung betrifft ein Verfahren zur Lackierung mit hitzehärtbaren wäßrigen Überzugsmitteln, insbesondere zur Herstellung von Mehrschichtlackierungen.

Wäßrige Lacke, insbesondere Klarlacke, werden in der Literatur beschrieben. In der DE-A-28 06 497 wird eine Mehrschichtlackierung mit einem Klarlacküberzug als Deckschicht beschrieben, wobei dieser Klarlack auch wasserverdünnbar sein soll. Wasserverdünnbare Klarlacke werden jedoch nicht definiert. Als Basislack-Überzugsmittel werden Polyester mit hohem Molgewicht und hoher Viskosität, gelöst in Xylol, verwendet, die mit Acrylharzen gemischt werden. Derartige Lacke haben einen hohen Bedarf an Neutralisationsmittel. Die DE-A-35 32 617 beschreibt wäßrige Beschichtungsmassen auf der Basis von hochwirksamen Harzen, beispielsweise Polyesterharzen, in denen Harzpartikel, bei denen es sich um Acrylharze handeln kann, dispergiert sind. Die erhaltenen Massen sind instabil und unterliegen einer raschen Phasentrennung.

In der DE-A-35 37 855 wird die Verwendung von sauren Polykondensaten auf der Basis von Acrylharzen und Polyetherpolyolen beschrieben, die nach ihrer Neutralisation als wasserverdünnbare Bindemittel zur Herstellung von wasserverdünnbaren Einbrennfüllern, Decklacken oder Klarlacken eingesetzt werden können. Die hier eingesetzten Polyetherpolyole verlieren auch nach dem Einbrennen nicht ihre Hydrophilie, so daß Feuchtraum- und Schwefelsäurebeständigkeit dieser Systeme unzureichend sind.

Auch in der EP-A-0 365 775 wird die Verwendung saurer Polyacrylate beschrieben, die nach ihrer Neutralisation und Verdünnung zur Herstellung wasserverdünnbarer Decklacke dienen. Hier wird als Vernetzungsmittel Melaminharz eingesetzt. Diese Überzugsmittel weisen einen unbefriedigenden High-solid-Wert auf, d.h. sie benötigen einen hohen Gehalt an organischen Lösemitteln in der Größenordnung von 27 g und mehr bezogen auf 100 g Harzfestkörpergehalt (entsprechend einem High-solid-Wert von 73 und weniger).

In der DE-A-42 23 183 werden wäßrige Emulsionen auf der Basis von Acrylcopolymeren beschrieben, die im Schoße eines oder mehrerer niedermolekularer Polyester synthetisiert und anschließend mit einem Gemisch aus Melaminharzen und verkappten-Polyisocyanaten vernetzt werden.

Die DE-A-38 32 826 beschreibt ein Verfahren zur Herstellung eines Überzuges auf der Basis eines wasserverdünnbaren Polyacrylatharzes und eines Aminoplastharzes.

In der DE-A-39 10 829 wird ein wasserlöslicher Klarlack beschrieben, der sich im wesentlichen aus einem Oligoesteracrylatharz und einem Melaminharz zusammensetzt.

In keiner der vorstehenden Literaturstellen wird die Verwendung von Triazin-Triscarbamat als Vemetzer beschrieben.

Die EP-A-0 604 922 beschreibt eine härtbare Zusammensetzung, die sich aus einem hydroxyfunktionellen Acrylcopolymeren, einem Triazin-Triscarbamdt und einem Säurekatalysator zusammensetzt. Die Zusammensetzungen werden insbesondere für Überzugsmittel auf der Basis organischer Lösemittel verwendet

In den Schriften EP-A-0 541 966, US-5 084 541 und US 4 939 213 wird die Herstellung von Triazin-Triscarbamat-Vernetzern eingehend beschrieben. Eine Verwendung derartiger Vernetzer zur Vernetzung von Polyesteracrylschoßpolymeren wird nicht erwähnt.

Die DE-Patentanmeldung 195 25 375.2 schlägt Überzugsmittel vor, die als Bindemittel (Meth)acryl-Copolymerisate, hydroxyfunktionelle Polyester, weitere hydroxyfunktionelle Bindemittel und eine Vernetzerkomponente auf Triazinbasis enthalten. Diese Überzugsmittel enthalten bei ihrer Anwendung zwingend blockiertes Polyisocyanat als weitere Vernetzerkomponente.

Aus WO 96 15 185 ist ein wasserverdünnbares Überzugsmittel bekannt, das ein anionisch stabilisiertes Bindemittel mit aktiven Wasserstoff enthaltenden Gruppen und ein 1,3,5-Triazincarbamat als Vernetzer enthält.

Aufgabe der Erfindung ist die Bereitstellung eines Lackierverfahrens mit wäßrigen Überzugsmitteln, das insbesondere geeignet ist für chemikalienfeste und vergilbungsfreie Beschichtungen mit sehr gutem Decklackstand, sehr geringer Ablaufneigung und insbesondere sehr hoher Kochsicherheit, wobei zusätzlich der Lack eine hohe Lagerstabilität besitzen soll.

Es hat sich gezeigt, daß diese Aufgabe gelöst werden kann durch ein Verfahren zur Lackierung eines Substrats, bei dem auf ein Substrat, das vorbeschichtet sein kann, eine Decklackschicht oder eine Basislackschicht und darüber eine Klarlackschicht aufgetragen und eingebrannt werden, das dadurch gekennzeichnet ist, daß als Decklackschicht, als Basislackschicht und/oder Klarlackschicht ein wäßriges Überzugsmittel aufgetragen wird, das neben gegebenenfalls vorhandenen lacküblichen Additiven eine von blockiertem Polyisocyanat freie wäßrige Bindemittelzusammensetzung enthält, wobei die Bindemittelzusammensetzung enthält:
- A) 10 bis 85 Gew.-%: eines oder mehrerer hydroxyfunktioneller (Meth)acryl-Copolymerisate,
- B) 85 bis 10 Gew.-%: eines oder mehrerer hydroxyfunktioneller Polyester,
- C) 0 bis 40 Gew.-%: eines oder mehrerer von A) und B) unterschiedlicher hydroxyfunktioneller Bindemittel,
- D) 5 bis 40 Gew.-%: eines oder mehrerer Triazin-triscarbamate der allgemeinen Formel

C₃N₃(NHCOOR)₃

worin die Reste R, die gleich oder verschieden sein können C₁ bis C₂₀-Alkyl, C₆ bis C₂₀-Aryl und/oder C₇ bis C₂₀-Aralkyl bedeuten;
- E) 0 bis 40 Gew.-%: eines oder mehrerer Melamin- und/oder Phenoplastharze;
wobei die Summe der Komponenten A) bis E) sich jeweils 100 Gew.-% ergänzt,

und wobei mindestens 50 Gew.-% der (Meth)acryl-Copolymerisate, bezogen auf die Gesamtmenge der Komponente A) in Gegenwart von einem oder mehreren der hydroxyfunktionellen Polyester, entsprechend mindestens 20 Gew.-% der Gesamtmenge der Komponente B), hergestellt worden sind.

Die erfindungsgemäß eingesetzten hitzehärtbaren wäßrigen Überzugsmittel enthalten eine wäßrige Bindemittelzusammensetzung neben gegebenenfalls weiteren lacküblichen Additiven. Dabei sind unter lacküblichen Additiven auch Pigmente und/oder Füllstoffe zu verstehen.

Bei der Bereitstellung der erfindungsgemäß eingesetzten Bindemittelzusammensetzungen bzw. der in den eingesetzten Überzugsmitteln enthaltenen Bindemittel werden mindestens 50 Gew.-%, bevorzugt über 70 Gew.-% der Gesamtmenge des (Meth)acryl-Copolymeren A) und besonders bevorzugt seine Gesamtmenge in Gegenwart von mindestens 20 Gew.-%, bevorzugt über 30 Gew.-%, besonders bevorzugt über 40 Gew.-% des Polyesterharzes B) hergestellt, wobei sich die letztgenannten Gewichtsprozente auf die Gesamtmenge der Komponente B) beziehen. Werden mehrere Polyester als Komponente B) verwendet, so können diese bei der Herstellung des (Meth)acryl-Copolymeren A) als Gemisch vorliegen, oder es können einzelne oder ein Teil der Polyester eingesetzt und die restlichen zu einem späteren Zeitpunkt zugesetzt werden. Die Herstellung der (Meth)acryl-Copolymeren A) kann durch radikalische Polymerisation nach üblichen Verfahren erfolgen. Dabei werden mindestens 20 Gew.-%, bevorzugt über 30 Gew.-%, besonders bevorzugt über 40 Gew.-% des Polyesterharzes B) bevorzugt im Gemisch mit geeigneten organischen Lösemitteln in das Reaktionsgefäß vorgelegt, auf Reaktionstemperatur geheizt und mindestens 50 Gew.-%, bevorzugt über 70 Gew.-%, besonders bevorzugt die Gesamtmenge des gegebenenfalls Radikalinitiatoren enthaltenden Monomerengemischs für die Synthese des (Meth)acryl-Copolymeren A) zudosiert. Die gegebenenfalls verbleibende Restmenge des gegebenenfalls Radikalinitiatoren enthaltenden Monomerengemischs für die Synthese des (Meth)acryl-Copolymeren A) kann in gleicher Weise radikalisch polymerisiert werden, wobei nur organisches Lösemittel ohne Anteile des Polyesters B) in das Reaktionsgefäß vorgelegt werden, auf Reaktionstemperatur geheizt wird und danach so verfahren wird wie vorstehend beschrieben. Das durch Polymerisation der gegebenenfalls verbleibenden Restmenge des Monomerengemischs erhaltene (Meth)acrylcopolymere A) kann bei der Formulierung des erfindungsgemäßen Überzugsmittels dem in Gegenwart des Polyesterharzes B) synthetisierten (Meth)acrylcopolymeren A) zugemischt werden.

Die Herstellung der (Meth)acrylcopolymerisate kann durch Polymerisation nach üblichen Verfahren, wie z.B. der Substanz-, Lösungs- oder Perlpolymerisation durchgeführt werden. Die verschiedenen Polymerisationsverfahren sind dem Fachmann gut bekannt und beispielsweise beschrieben in: Houben-Weyl, Methoden der organischen Chemie, 4. Aufl., Band 14/1, Seiten 24 bis 255 (1961). Das Lösungspolymerisationsverfahren wird für die Herstellung der im erfindungsgemäßen Überzugsmittel eingesetzten (Meth)acryl-Copolymerisate bevorzugt. Bei diesem Verfahren wird das Lösemittel im Reaktionsgefäß vorgelegt, auf Siedetemperatur geheizt und die Monomeren werden gegebenenfalls im Gemisch mit Radikalinitiatoren kontinuierlich in einer bestimmten Zeit zudosiert. Die Polymerisationstemperaturen liegen beispielsweise zwischen 60°C und 160°C, bevorzugt zwischen 120°C und 150°C. Bei der Polymerisation können die Initiatoren und Monomeren jedoch auch getrennt bzw. zeitlich versetzt zudosiert werden.

Zur Herstellung der hydroxyfunktionellen Methacrylate der Komponente A) können neben hydroxyfunktionalisierten (Meth)acrylmonomeren und anderen hydroxyfunktionalisierten Monomeren (Meth)acrylmonomeren und andere Monomeren eingesetzt werden, die nicht-funktionalisiert und/oder carboxyfunktionalisiert sind. Desweiteren können auch weitere ethylenisch ungesättigte Monomere eingesetzt werden. Der Ausdruck "(meth)acryl" steht synonym für "acryl und/oder methacryl".

Beispiele für verwendbare nicht-funktionalisierte (Meth)acrylate sind z.B. langkettige, verzweigte oder unverzweigte ungesättigte Monomere, wie Alkyl(meth)acrylate mit C₈-C₁₈-Ketten im Alkylteil, wie z.B. 2-Ethylhexyl(meth)acrylat, Octyl(meth)acrylat, 3,5,5-Trimethylhexyl(meth)acrylat, Decyl(meth)acrylat, Dodecyl(meth)acrylat, Hexadecyl(meth)acrylat, Octadecyl(meth)acrylat, Laurylacrylat-1214, Cyclohexyl(meth)acrylat, Isobornyl(meth)acrylat, 4-tert-Butylcyclo-hexylmethacrylat. Weitere Beispiele sind kurz- oder mittelkettige, ver-zweigte oder unverzweigte ungesättigte Monomere, wie Alkyl(meth)-acrylate mit C₁-C₇-Ketten im Alkylteil, z.B. Methyl(meth)acrylat, Ethyl(meth)acrylat, Propyl(meth)acrylat, Butyl(meth)acrylat, Isopropyl-(meth)acrylat, Isobutyl(meth)acrylat, Tertärbutyl(meth)acrylat, Pentyl(meth)acrylat, Hexyl(meth)acrylat, Cyclohexyl(meth)acrylat.

Beispiele für weitere verwendbare nicht-funktionalisierte polymerisierbare Monomere sind monovinylaromatische Verbindungen. Vorzugsweise enthalten sie 8 bis 10 Kohlenstoffatome je Molekül. Beispiele für geeignete Verbindungen sind Styrol, Vinyltoluole, α-Methylstyrol, Chlorstyrol, o-, m- oder p-Methylstyrol, 2,5-Dimethylstyrol, p-Methoxystyrol, p-tert.-Butylstyrol, p-Dimethylaminostyrol, p-Acetamidostyrol und m-Vinylphenol. Bevorzugt werden Vinyltoluole sowie insbesondere Styrol eingesetzt. Auch möglich ist die Verwendung des Vinylesters der Versaticsäure (Handelsbezeichnung VEOVA 10 der Shell AG).

Beispiele für weitere geeignete nicht-funktionalisierte ethylenisch ungesättigte Monomere sind die Alkylester der Malein-, Fumar-, Tetrahydrophthal-, Croton-, Isocroton-, Vinylessig- und Itaconsäure, wie z.B. die entsprechenden Methyl-, Ethyl-, Propyl-, Butyl-, Isopropyl-, Isobutyl-, Pentyl-, Amyl-, Isoamyl-, Hexyl-, Cyclohexyl-, 2-Ethylhexyl-, Octyl-, 3,5,5,-Trimethylhexyl-, Decyl-, Dodecyl-, Hexadecyl-, Octadecyl- und Octadecenylester.

Die verwendeten hydroxyfunktionellen (Meth)acrylmonomere bzw. Monomere können primäre oder sekundäre Hydroxyfunktionen tragen. Beispiele für Monomere mit primären Hydroxyfunktionen sind Hydroxyalkylester, α,β-ungesättigter Carbonsäuren, wie z.B. Acrylsäure und/oder Methacrylsäure mit einer primären OH-Gruppe und einem C₂-C₃-Hydroxyalkylrest wie Hydroxyethyl(meth)acrylat, sowie Hydroxyalkylester α,β-ungesättiger Carbonsäuren wie der Acrylsäure und/oder Methacrylsäure mit einer primären OH-Gruppe und einem C₄-C₁₈-Hydrxyalkylrest wie z.B. Butandiolmonoacrylat, Hydroxyhexylacrylat, Hydroxyoctylacrylat und die entsprechenden Methacrylate und Umsetzungsprodukte von Hydroxyethyl(meth)acrylat mit Caprolacton.

Beispiele für Monomere mit sekundären OH-Funktionen sind Hydroxypropyl(meth)acrylat, Addukte aus Glycidyl(meth)acrylat und gesättigten kurzkettigen Säuren mit C₁-C₃-Alkylresten, z.B. Essigsäure oder Propionsäure, Umsetzungsprodukte aus Glycidyl(meth)acrylat mit gesättigten verzweigten oder unverzweigten Fettsäuren mit C₄-C₂₀-Alkylresten, z.B. Butansäure, Capronsäure, Laurinsäure, Palmitinsäure, Stearinsäure, Arachidonsäure sowie Addukte aus Glycidylestern stark verzweigter Monocarbonsäuren (Glycidylester der Versaticsäure ist unter dem Handelsnamen Cardura E erhältlich) mit ungesättigten COOHfunktionellen Verbindungen, wie z.B. Acryl- bzw. Methacrylsäure, Maleinsäure, Crotonsäure, Addukte aus Cardura E mit ungesättigten Anhydriden wie z.B. Maleinsäureanhydrid. Die Umsetzung der Acrylsäure oder Methacrylsäure mit dem Glycidylester einer Carbonsäure mit einem tertiären α-Kohlenstoff kann vor, während oder nach der Polymerisationsreaktion erfolgen.

Beispiele fiir geeignete carboxylgruppenhaltige Monomere sind ungesättigte Carbonsäuren, wie z.B. Acryl-, Methacryl-, Itacon-, Croton-, Isocroton-, Aconit-, Malein- und Fumarsäure, Halbester der Malein- und Fumarsäure sowie β-Carboxyethylacrylat und Addukte von Hydroxyalkylestern der Acrylsäure und/oder (Meth)acrylsäure mit Carbonäureanhydriden, wie z.B. der Phthalsäure-mono-2-methacryloyloxyethylester, sowie Halbester von Maleinsäureanhydrid durch Anlagerung von gesättigten aliphatischen Alkoholen wie z.B. Ethanol, Propanol, Butanol und/oder Isobutanol.

Ebenfalls möglich ist die Verwendung von (Meth)acrylmonomeren mit endständigen tert.-Aminogruppen. Beispiele für solche Monomere sind tert.-Aminomethyl(meth)acrylat oder tert.-Aminopropyl(meth)acrylat. Sie werden bevorzugt in geringer Menge eingesetzt.

Weiterhin können auch Monomere mit mindestens zwei polymerisierbaren, olefinisch ungesättigten Doppelbindungen eingesetzt werden. Sie werden bevorzugt in kleinen Anteilen verwendet. Bevorzugt liegt der Anteil dieser Monomeren unter 5 Gew.-%, bezogen auf das Gesamtgewicht der Monomeren. Beispiele für derartige Verbindungen sind Hexandioldi(meth)acrylat, Ethylenglykoldi(meth)acrylat, Butandioldi(meth)acrylat, Hexamethylenbis(meth)acrylat, Trimethylolpropantri(meth)acrylat und ähnliche Verbindungen.

Ebenfalls einsetzbar sind Siloxan-modifizierte Monomere wie z.B. Trimethylsiloxyethyl(meth)acrylat und Trimethylsiloxypropyl(meth)acrylat.

Beispiele für Radikalinitiatoren, die zur Herstellung der (Meth)acrylcopolymerisate, sei es allein oder in Gegenwart der Polyesterkomponente B), verwendet werden könen, sind übliche Initiatoren, die dem Fachmann auf dem Gebiet der Polymerisation olefinischer Doppelbindungen geläufig sind, wie Dialkylperoxide, wie Di-tert.-Butylperoxid, Di-Cumylperoxid; Diacylperoxid, wie Di-benzoylperoxid, Dilauroylperoxid; Hydroperoxide, wie Cumolhydroperoxid, tert.-Butylhydroperoxid; Perester, wie tert.-Butyl-perbenzoat, tert.-Butylperpivalat, tert.-Butyl-per-3,5,5-trimethylhexanoat, tert.-Butyl-per-2-ethyl-hexanoat; Peroxiddicarbonate, wie Di-2-ethylhexylperoxydicarbonat, Dicyclohexylperoxydicarbonat; Perketale, wie 1,1-bis-(tert.-Butylperoxy)-3,5,5-trimethyl-cyclohexan, 2,2-Bis-(tert.-Butylperoxy)cyclohexan; Ketonperoxide, wie Cyclohexanonperoxid, Methylisobutylketonperoxid und Azoverbindungen, wie 2,2'Azo-bis-(2,4-dimethyl-valeronitril9, 2,2'-Azo-bis-(2-methylbutyronitril), 1,11-Azo-bis-cyclohexancarbonitril, Azo-bis-isobutyronitril, C-Cspaltende Initiatoren wie z.B. Benzpinakol-Derivate.

Die Polymerisationsinitiatoren werden im allgemeinen beispielsweise in einer Menge von 0,1 bis 4 Gew.-%, bezogen auf die Monomeren-Einwaage, zugesetzt.

Die Polymerisation findet bevorzugt in organischen Lösemitteln, beispielsweise aromatischen Lösemitteln, wie z.B. Xylol statt. Weitere Beispiele für verwendbare Lösemittel sind die später in der Beschreibung im Anschluß an die Polyurethanpolyole der Komponente C) beschriebenen Lösemittel.

Zur Regelung des Molekulargewichtes können insbesondere bei der bevorzugten Lösungspolymerisation Kettenüberträger mitverwendet werden. Beispiele hierfür sind Mercaptane, Thioglykolsäureester, Chlorkohlenwasserstoffe, Cumol und dimeres α-Methylstyrol.

Die beschriebenen (Meth)acrylcopolymeren sollen eine Hydroxylzahl von 50 bis 300 mg KOH/g, bevorzugt 100 bis 200 mg KOH/g, eine Säurezahl von 0 bis 60 mg KOH/g, bevorzugt 10 bis 35 mg KOH/g, ein Zahlenmittel des Molakulargewichts von 1000 bis 10000, bevorzugt 1500 bis 5000, und eine Glastemperatur von -20 bis +70°C, bevorzugt 0 bis 50°C besitzen.

Die Mengenanteile der verschiedenen Monomeren werden bei der Herstellung in dem Fachmann geläufiger Weise so gewählt, daß sich die gewünschten Spezifikationen für Molekulargewicht, OH- und Säurezahl, sowie Glastemperatur ergeben.

Die Polyesterharze B) besitzen bevorzugt Zahlenmittel der Molmassen (Mn) von 200 bis 5000, besonders bevorzugt 1000 bis 3000. Ihre OH-Zahl ist bevorzugt von 30 bis 450 mg KOH/g, besonders bevorzugt von 120 bis 280 mg KOH/g. Die Säurezahl liegt bevorzugt bei 0 bis 60 mg KOH/g, besonders bevorzugt bei 2 bis 35 mg KOH/g. Die Herstellung der Polyesterharze erfolgt nach den üblichen, dem Fachmann geläufigen Verfahren z.B. durch Polykondensation von Mono- und/oder Polycarbonsäuren, wie Di- und/oder Tri- bzw. Polyolen, beispielsweise in Gegenwart von üblichen Veresterungskatalysatoren und bei erhöhten Temperaturen von z.B. 180-250°C, beispielsweise in der Schmelze. Gegebenenfalls können auch Schleppmittel, wie z.B. Xylol verwendet werden. Die zur Herstellung verwendbaren Komponenten sind nachfolgend unter b1) bis b7) beschrieben.

Die Gewichtsprozente der bei der Herstellung der Polyester einsetzbaren Komponenten b1) bis b7) werden insbesondere so gewählt, daß sich die gewünschten OH-Zahlen ergeben.

Geeignete Monocarbonsäuren b1) sind beispielsweise Benzoesäure, tert.-Butylbenzoesäure, Hexahydrobenzoesäure, gesättigte Fettsäuren wie z.B. 2-Ethylhexansäure, Isononansäure, Kokosölfettsäure, hydrierte technische Fettsäuren bzw. Fettsäuregemische, Dekansäure, Dodekansäure, Tetradekansäure, Stearinsäure, Palmitinsäure, Docosansäure, ungesättigte Fettsäuren, wie z.B. Sojafettsäure, Sorbinsäure, Erdnuß-ölfettsäure, Konjugenfettsäuren, Tallölfettsäure, Safflorölfettsäure sowie Gemische dieser oder anderer Monocarbonsäuren. Bevorzugt liegt der Anteil an Monocarbonsäuren über 10 Gew.-% und unter 40 Gew.-%.

Bevorzugt werden 2-Ethylhexansäure und Isononansäure als Monocarbonsäure b1) eingesetzt.

Geeignete Polycarbonsäuren b2) bzw. Anhydride sind beispielsweise Phthalsäure(anhydrid), Isophthalsäure, Terephthalsäure, Tetrahydrophthalsäure(anhydrid), Hexahydrophthalsäure(anhydrid), 1,3- und 1,4-Cyclohexandicarbonsäure, Maleinsäure(anhydrid), Bernsteinsäure(anhydrid), Fumarsäure, Adipinsäure, Sebacinsäure, Azelainsäure, Dimerfettsäuren, Trimerfettsäuren, Trimellithsäure(anhydrid), Pyromellithsäure(anhydrid) und Gemische dieser oder anderer Säuren.

Bevorzugte Polycarbonsäuren b2) sind Adipinsäure sowie cycloaliphatische Dicarbonsäuren wie Hexahydrophthalsäure(anhydrid) und 1,4-Cyclohexandicarbonsäure.

Geeignete Diole und Polyole wie Triole b3) sind beispielsweise Glycerin, Trimethylolpropan, Pentaerythrit, Dipentaerythrit und Gemische dieser oder anderer mehrwertiger Alkohole.

Bevorzugte Triole und mehrwertige Alkohole b3) sind Trimethylolpropan und Pentaerythrit.

Geeignete Diole b4) sind beispielsweise Ethylenglykol, 1,2- und 1,3-Propylenglykol, 1,3-, 1,4-, 2,3-Butandiol, 1,5-Pentandiol, 1,6-Hexan-diol, 2,5-Hexandiol, Trimethylhexandiol, Diethylenglykol, Triethylen-glykol, hydrierte Bisphenole, 1,4-Cyclohexandiol, 1,4-Cyclohexan-dimethanol, Neopentylglykol, Tricyclodecandiol und Gemische dieser oder anderer Diole.

Bevorzugte Diole b4) sind 1,6-Hexandiol und Neopentylglykol.

Geeignete Monoalkohole b5) sind beispielsweise n-Hexanol, Cyclohexanol, Decanol, Dodecanol, Tetradecanol, Octanol, Octadecanol, natürliche und synthetische Fettalkohole wie z.B. Laurylalkohol, Ocenol 110/130 (Fa. Henkel) und Gemische dieser und anderer Alkohole.

Geeignete Ausgangskomponenten Polycarbonsäuren bzw. Dicarbonsäuren b6) sind beispielsweise Dimethylolpropionsäure, Milchsäure, Apfelsäure, Weinsäure, epsilon-Hydroxycapronsäure, Rizinusölfettsäure oder epsilon-Caprolacton.

Bevorzugte Komponenten b6) sind Dimethylolpropionsäure und epsilon-Caprolacton.

Es kann auch in Gegenwart von Aminogruppen enthaltenden Komponenten b7) gearbeitet werden. Geeignete Ausgangskomponenten b7) sind beispielsweise Aminoethanol, 2-Aminopropanol, Diethanolamin, Aminoessigsäure oder 6-Aminohexansäure.

Geeignete Veresterungskatalysatoren bei der Herstellung des Polyesterharzes B) können z.B. sein: Dibutylzinnoxid, Schwefelsäure, p-Toluolsulfonsäure.

Nach beendeter Polykondensation kann der Festkörpergehalt des Polyesterharzes B) gegebenenfalls durch Verdünnung mit geeigneten organischen Lösemitteln eingestellt werden. Beispiele für geeignete Lösemittel sind die vorstehend bei der Synthese des (Meth)acrylcopolymeren A) erwähnten Lösemittel bzw. Gemische dieser oder anderer Lösemittel.

Das (Meth)acryl-Copolymer A) wird, zumindest anteilweise, wie vorstehend beschrieben, im Schoße des Polyesterharzes B) hergestellt.

Die verwendeten hydroxy- und gegebenenfalls carboxyfunktionellen (Meth)acrylcopolymeren A) und Polyesterharze B) können mit einem Lacton "kettenverlängert" werden. Die Lactone (cyclische Ester) lagern sich an Hydroxylund/oder Carboxylgruppen an, wobei der Ring geöffnet wird und eine neue endständige Hydroxyl- oder Carboxylgruppe entsteht. Ein Bei-spiel für ein besonders bevorzugtes Lacton ist das epsilon-Caprolacton.

Beispiele für andere Lactone sind Lactone, wie beta-Propiolacton, delta-Valerolacton, gamma-Butyrolacton, zeta-Enantholacton, eta-Caprylolacton. Derartige Lactone können substituiert sein: Beispiele hierfür sind 6-Methyl-epsilon-caprolacton, 3-Methyl-epsilon-caprolacton, 5-Methyl-epsilon-caprolacton, 5-Vinyl-epsiloncaprolacton, 4-Methyl-delta-valerolacton, 3,5-Dimethyl-epsilon-caprolacton, und Mischungen davon. Die Umsetzung mit dem Lacton kann beispielsweise unmittelbar im Anschluß an die Harzsynthese, d.h. an die Synthese des (Meth)acrylpolymerisats A) und/oder des Polyesterharzes B) erfolgen. Die Reaktion erfolgt beispielsweise bei erhöhter Temperatur, beispielsweise bei Temperaturen bis zu 100°C. Die Reaktion kann beispielsweise unter Rühren beispielsweise bis zu 10 Stunden durchgeführt werden.

Die beim erfindungsgemäßen Verfahren verwendeten Überzugsmittel können als Komponente C) ein oder mehrere von A) und B) verschiedene hydroxyfunktionelle Bindemittel enthalten, beispielsweise von A) verschiedene (Meth)acrylcopolymerharze, von B) verschiedene Polyesterharze, Polyetherharze oder auch Polyurethanharze. Bevorzugt enthalten die erfindungsgemäßen Überzugsmittel neben A) und B) keine weiteren Bindemittel.

Beispiele für Polyurethanpolyole der vorstehend definierten Komponente C) ergeben sich aus der Umsetzung von Di- und Polyisocyanaten mit einem Überschuß an Diund/oder Polyolen. Geeignete Di- und/oder Polyole sind solche, wie sie bereits bei der Beschreibung der Polyester aufgeführt wurden. Beispiele für geeignete Diund/oder Polyisocyanate sind cycloaliphatische und aliphatische Polyisocyanate wie 1,2-Propylendüsocyanat, 2,3-Butylendiisocyanat, Tetramethylendiisocyanata, 1,6-Hexamethylendiisocyanat, 2,2,4-Trimethylendiisocyanat, 1,12-Dodecandiisocyanat, Cyclohexan-1,3- und 1,4-diisocyanat, 1-Isocyanato-3,3,5-trimethyl-5-isocyanatomethylcyclohexan (=Isophorondiisocyanat IPDI) oder Gemische dieser Verbindungen.

Desweiteren können geringe Mengen organischer Lösemittel zugesetzt werden. Als organische Lösemittel eignen sich lackübliche Lösemittel, wie sie später auch in dem erfindungsgemäßen Überzugsmittel eingesetzt werden können, beispielsweise: Glykolether, wie Ethylenglykoldimethylether; Glykoletherester, wie Ethylglykolacetat, Butylglykolacetat, 3-Methoxy-n-butylacetat, Butyldiglykolacetat, Methoxypropylacetat, Ester, wie Butylacetat, Isobutylacetat, Amylacetat; Ketone, wie Methylethylketon, Methylisobutylketon, Diisobutylketon, Cyclohexanon, Isophoron; aromatische Kohlenwasserstoffe, wie Xylol, Solvesso 100 (eingetragenes Warenzeichen für ein Gemisch aromatischer Kohlenwasserstoffe mit einem Siedebereich von 155 bis 185°C) und aliphatische Kohlenwasserstoffe können ebenfalls im Verschnitt mit den oben genannten Lösemitteln eingesetzt werden. Ebenfalls möglich ist die Verwendung von Poly(C₂ bis C₃)-alkylenglykol-di(C₁ bis C₄)alkylethern wie Polyethylenglykoldi-nbutylether.

Die beim erfindungsgemäßen Verfahren verwendeten wäßrigen Bindemittelzusammensetzungen und Überzugsmittel enthalten als Vernetzerkomponente D) ein Triazin-Triscarbamat der allgemeinen Formel

C₃N₃(NHCOOR)₃.

Hierbei kann R ein Alkylrest mit 1 bis 20 C-Atomen, ein Arylrest mit 6 bis 20 C-Atomen und/oder ein Aralkylrest mit 7 bis 20 C-Atomen sein. Die Reste R können gleich oder verschieden sein. Die Herstellung derartiger Vernetzer ist geläufig und wird beispielsweise in EP-A-0 541 966, US 5 084 541 und US 4 939 213. Spezielle Beispiele für diese Carbamatvernetzer sind 2,4,6-Tris-(methoxycarbonylamino)-1,3,5-triazin und 2,4,6-Tris-(butoxycarbonylamino)-1,3,5-triazin.

Die erfindungsgemäß eingesetzten Bindemittel und Überzugsmittel können als zusätzliche Komponente E) eines oder mehrere Aminoplast- und/oder Phenoplastharze enthalten. Es können die auf dem Lacksektor als Vernetzungsmittel üblichen Aminoplastharze verwendet werden. Zu geeigneten Aminoplastharzen zählen beispielsweise alkylierte Kondensate, die durch Umsetzung von Aminotriazinen und Amidotriazinen mit Aldehyden hergestellt werden. Zu deren Herstellung werden nach bekannten technischen Verfahren Amino- oder Amidogruppen tragende Verbindungen wie Melamin, Benzoguanamin, Dicyandiamid, Harnstoff, N,N'-Ethylenharnstoff in Gegenwart von Alkoholen, wie Methyl-, Ethyl-, Propyl-, iso-Butyl-, n-Buthyl- und Hexylalkohol mit Aldehyden, insbesondere Formaldehyd, kondensiert. Die Reaktivität derartiger Aminharze wird bestimmt durch den Kondensationsgrad, das Verhältnis der Amin- bzw. Amid-Komponente zum Formaldehyd und durch die Art des verwendeten Veretherungsalkohols.

Die Aminoplastharze können wasserverdünnbar oder nicht wasserverdünnbar sein. Beispiele für nicht wasserverdünnbare Aminharzvernetzer sind in Wasser unlösliche butanol- oder isobutanolveretherte Melaminharze wie z.B. die Handelsprodukte Setamin US 138 oder Maprenal FM 610, mischveretherte Melaminharze, die sowohl butanol- als auch methanolverethert sind, wie z.B. Cymel 254, sowie Hexamethyloxymethylmelaminharze wie z.B. Cymel 301 oder Cymel 303, wobei letztere zur Vernetzung einen externen Säurekatalysator wie z.B. p-Toluolsulfonsäure benötigen können.

Beispiele für wasserverdünnbare Aminharzvernetzer sind übliche hydrophile und damit wasserlösliche bzw. wasserverträgliche Melaminharze, wie z.B. methyl-veretherte Melaminharze wie z.B. Cymel 325, Cymel 327, Cymel 350, Cymel 370, Maprenal MF 927.

Beispiele für bevorzugte Phenolharze, die als Vernetzer dienen können, sind übliche Reaktionsprodukte von Phenol oder substituierten Phenolen mit verschiedenen Aldehyden im molaren Überschuß in Gegenwart alkalischer Katalysatoren (Resol-Typ). Beispiele für phenolische Verbindungen sind Phenol, Kresol, Xylenol, Resorcin und substituierte Phenole wie p-tert.-Butylphenol, p-tert.-Amylphenol, p-Phenylphenol, Isothymol, Cardanol oder auch mehrkernige Phenole wie Dihydroxydiphenylpropan (Bisphenol A) oder Dihydroxy-diphenylmethan (Bisphenol F). Als Ausgangsmaterial können auch phenolische Novolakharze dienen, die gegebenenfalls mit Monocarbonsäuren, bevorzugt α-verzweigten Monocarbonsäuren, Monophenolen, die besonders mit C1- bis C18-Alkylgruppen substituiert sind oder auch Monoepoxiden wie α-Monoepoxidalkane, Monoglyceridether oder Monoglyceridester, defunktionalisiert werden. Als Aldehyde finden Verwendung Formaldehyd und seine Polymerisationsprodukte wie Paraformaldehyd, Trioxymethylen, Polyformaldehyd oder auch Hexamethylentetramin. Gut geeignet sind Acetaldehyd, Paraldehyd und Metaldehyd, sowie Butyraldehyd oder Furfural. Die Methylolgruppen werden teilweise oder bevorzugt vollständig verethert mit Methanol, Ethanol, Propanol und/oder Butanol.

Die beim erfindungsgemäßen Verfahren verwendete Bindemittelzusammensetzung liegt in einer wasserverdünnbaren Form vor. Dies kann beispielsweise durch partielle oder vollständige Neutralisation der sauren Gruppen der Komponente A), B) und/oder mit Basen und/oder ohne Zusatz von Emulgatoren erzielt werden. Das im weiteren beschriebene Verfahren zur Herstellung von wasserverdünnbaren Zusammensetzungen wird zur Vereinfachung nur am Beispiel von Komponente A) beschrieben, ist jedoch auch auf die Komponenten A), B) und C) zu übertragen. Sofern eine wäßrige Emulsion erstellt werden soll, wird das bei der Herstellung der Komponenten A) verwendete Lösemittel weitgehend entfernt. Dies kann beispielsweise destillativ, gegebenenfalls unter Vakuum erfolgen. Das erhaltene Harzkonzentrat, das einen hohen Festkörpergehalt von beispielsweise 90 Gew.-% hat, kann dann über die sauren Gruppierungen der Komponente A) mit einer üblichen Base, z.B. Ammoniak oder einem organischen Amin, z.B. Triethylamin, neutralisiert werden; anschließend wird es mit so wenig Wasser angemischt, daß noch keine Phasenumkehr stattfindet. Das neutralisierte Harzkonzentrat der Komponente A) fungiert dann als Emulgatorharz. In dieses Emulgatorharz, das eine Wasser-in-Öl-Emulsion darstellt, können dann die Komponenten B), C), D) und E) sowie weitere Lackadditive eingetragen werden. Ebenfalls möglich ist es, Lackadditive in das wasserfreie Harzkonzentrat einzurühren, und anschließend zu emulgieren. Anschließend kann dann nach Zugabe von weiterem Wasser beispielsweise unter starkem Rühren und erforderlichenfalls unter Erwärmen, beispielsweise auf Temperaturen von 30 bis 80°C, z.B. 50°C, unter Phasenumkehr die Herstellung der Öl-in-Wasser-Emulsion erfolgen. Im Prinzip in gleicher Weise wird vorgegangen, wenn ein basisches Harz vorliegt. Dann wird zur Salzbildung mit Säuren, z.B. organischer Säuren, wie z.B. Essigsäure und/oder Propionsäure neutralisiert.

Ebenfalls kann das Harzkonzentrat A) nach seiner Konfektionierung mit Vernetzern und Lackadditiven mit Hilfe eines üblichen, ionischen oder nicht-ionischen Emulgatoren emulgiert werden, wie z.B. in der nicht veröffentlichten DE-Patentanmeldung mit dem Aktenzeichen 19 540 320.7 beschrieben sind. Dies geschieht z.B. durch Homogenisieren des Harzkonzentrats und des nicht-ionischen Emulgators, gegebenenfalls unter Erwärmen, beispielsweise auf Temperaturen von 30 bis 80°C, z.B. 60°C. Ein derartiges Gemisch kann in einer üblichen Homogenisierungseinrichtung kontinuierlich oder diskontinuierlich emulgiert werden. Beispiele hierfür sind Rotor/Stator-Homogenisatoren, die mit Drehzahlen von beispielsweise 8000 bis 10000 Umdrehungen pro Minute arbeiten. Die Emulgatoren werden beispielsweise in Mengen von 3 bis 30 Gew.-%, bezogen auf das Harzkonzentrat, eingesetzt.

Die beim erfindungsgemäßen Verfahren verwendeten Bindemittelzusammensetzungen können in üblicher Weise zu wäßrigen Überzugsmitteln formuliert werden. Dies erfolgt im allgemeinen durch Zusatz von Lösemitteln oder Wasser, um die jeweils erforderliche Applikationsviskosität zu erreichen.

Geeignete organische Lösemittel für die Herstellung von wäßrigen Überzugsmitteln, beispielsweise Lacken, sind solche, wie sie auch bei der Herstellung der Einzelkomponenten verwendet werden können. Beispiele für derartige Lösemittel sind bereits vorstehend beschrieben worden, z.B. organische Lösemittel, wie aliphatische und aromatische Kohlenwasserstoffe, beispielsweise Toluol, Xylol, Gemische aliphatischer und/oder aromatischer Kohlenwasserstoffe, Ester und Ether.

Zur Herstellung der wäßrigen Überzugsmittel können übliche Additive zugesetzt werden, wie sie beispielsweise auf dem Lacksektor üblich sind. Beispiele für solche Additive sind Pigmente, beispielsweise transparente oder deckende farbgebende Pigmente wie Titandioxid oder Ruß und Effektpigmente, wie Metallschuppenpigmente und/oder Perlglanzpigmente.

Weitere Beispiele für Additive sind Füllstoffe, wie z.B. Talkum und Silikate; Weichmacher, Lichtschutzmittel, Katalysatoren, Stabilisatoren und Verlaufsmittel, wie Silikonöle. Die aus den Bindemitteln hergestellten Überzugsmittel können auf die gewünschte Applikationsviskosität durch entsprechende Regelung des Zusatzes von Lösemitteln und/oder Wasser und/oder Additiven eingestellt werden. Die Aushärtung von aus den wäßrigen Überzugsmitteln erstellten Überzügen kann in einem weiten Temperaturbereich von beispielsweise 80°C bis 180°C erfolgen, bevorzugt in dem Bereich zwischen 120°C und 150°C.

Das erfindungsgemäße Verfahren ist für die Herstellung von Überzügen geeignet, die auf einer Vielzahl von Substraten haften, wie beispielsweise Holz, Textilien, Kunststoff, Glas, Keramik, Putz, Zement und insbesondere Metall. Die wäßrigen Überzugsmittel können auch im Mehrschichtverfahren eingesetzt werden. So können sie beispielsweise auf übliche Grundierungen, Basislacke, Füller oder auf bereits vorhandene Decklacke aufgetragen werden.

Die durch das erfindungsgemäße Verfahren hergestellten Überzugsmittel-Filme haben eine sehr gute Chemikalienbeständigkeit, sehr gute Ablaufsicherheit, sehr hohe Kochsicherheit und guten Decklackstand bei sehr hohem Verarbeitungsfestkörper.

Die Applikation der Überzugsmittel kann in üblicher Weise erfolgen, beispielsweise durch Tauchen, Spritzen, Streichen oder auf elektrostatischem Wege.

Die vorliegende Erfindung betrifft auch die Herstellung von Mehrschichtlackierungen, insbesondere auf dem Kraftfahrzeugsektor, sowie die dabei erhaltenen Kraftfahrzeuge und Kraftfahrzeugteile.

Die folgenden Beispiele dienen zur Erläuterung der Erfindung. Alle Teile (T) beziehen sich auf das Gewicht.

### Beispiel 1

### Herstellung eines Acrylpolymeren(Vergleich):

In einem 2-Liter Dreihalskolben, der mit Rückflußkühler, Zulauftrichter und Rührer versehen ist, werden
160 T Xylol
40 T Butanol
289 T Glycidylester der Versaticsäure (Handelsprodukt Cardura^{R}
E10 der Fa. Shell)
vorgelegt und zum Sieden erhitzt (138-141°C).

Innerhalb von 5 Stunden werden anschließend
40 T Laurylacrylat
40 T Styrol
80 T Isobutylacrylat
81 T Butandiolmonoacrylat
109 T Acrylsäure
129 T Isobutylmethacrylat
132 T tert.-Butylperbenzoat
kontinuierlich zudosiert. Nach Zulaufende wird noch 4 Stunden am Rückfluß nachpolymerisiert. Das erhaltene Acrylcopolymere hat einen Festkörpergehalt von 80 % und eine Säurezahl von 27,1 mg KOH/g.

### Beispiel 2

### Herstellung einer Emulsion aus dem Acrylcopolymeren von Beispiel 1 (Vergleich):

In einem 6-Liter-Dreihalskolben, der mit Destillationsbrücke, Zulauftrichter, Thermometer und Rührer versehen ist, werden 4210 T des Acrylcopolymeren von Beispiel 1 vorgelegt und auf 135°C erhitzt. Es wird Vakuum angelegt und Lösemittel abdestilliert (840 T). Anschließend wird auf 85°C gekühlt und mit Inertgas auf Normaldruck gebracht. Unter Rühren werden
14,1 T Dimethylethanolamin
zugefügt und 5 Minuten gemischt.
492 T dieses neutralisierten Harzes werden nun mit
188 T 2,4,6-Tris(methoxycarbonylamino)-1,3,5-triazin (70 %ig gelöst in n-Butanol)
1,8 T eines handelsüblichen siloxanhaltigen Verlaufsmittels
5,8 T eines handelsüblichen UV-Absorbers und
2,9 T eines handelsüblichen, sterisch gehinderten Amins
versetzt und mit
309 T vollentsalztem Wasser
verdünnt.

### Beispiel 3 (Vergleich)

Es wird wie in Beispiel 2 verfahren, nur werden hier statt 188 T des Vernetzers 2,4,6-Tris(methoxycarbonylamino)-1,3,5-triazin
209 T eines methanolveretherten Melaminharzes (90 %ig in iso-Butanol gelöst)
eingesetzt.

### Beispiel 4

### Herstellung eines Polyesteroligomeren

336,7 T Trimethylolpropan
366,8 T Adipinsäure und
297,0 T Hexandiol
werden mit
5,0 T unterphosphoriger Säure
in einem mit Rührer, Abscheider, Thermometer und Rückflußkühler versehenen 2-Liter-Dreihalskolben bei 180°C bis 230°C in der Schmelze auf eine Säurezahl von 20 verestert.

Anschließend wird unter Vakuum bis zu einer Säurezahl von < 1,5 verestert.

Das so erhaltene Produkt hat einen Einbrennrückstand von 94,5 % (1h, 150°C), eine Viskosität von 3200 mPa.s (100 %ig), eine Hydroxylzahl von 460 und eine Farbzahl von 30 Hazen.

### Beispiel 5

### Herstellung von Polyesteroligomer-Polyacrylaten:

717 T Polyesteroligomer aus Beispiel 4
werden mit
597 T Ethanol
in einem mit Rührer, Rückflußkühler, Tropftrichter und Thermometer versehenen 4-Liter-Dreihalskolben auf 81°C bis zum Rückfluß erhitzt.

Anschließend wird in 4 Stunden eine Mischung aus
552 T Butandiolmonoacrylat
996 T tert.-Butylacrylat
74 T Acrylsäure
50 T Vazo 67 (2,2-Azo-bis-2-Methylbutyronitril)
zugetropft und anschließend 4 Stunden nachpolymerisiert.

Das Produkt hatte einen Einbrennrückstand von 79,8 % (1h, 150°C) bei einer Viskosität von 7200 mPa.s (DIN 53015), eine Säurezahl von 26,3, eine OH-Zahl von 231 und eine Farbzahl von 60 Hazen.

### Beispiel 6 (Vergleich)

### Lackemulsion aus Beispiel 5

165 T Polyesteroligomer-Polyacrylat aus Beispiel 5
werden mit
35 T Ethanol
5 T Butylglykol
1,5 T eines siloxanhaltigen Verlaufsmittels
7 T Dimethylethanolamin und
80 T vollentsalztem Wasser
gemischt und bei 30°C 10 Minuten gerührt. Anschließend werden 97,5 T eines methanolveretherten Melaminharzes 90 %ig in iso-Butanol, 5 T Ethanol und 25 T vollentsalztem Wasser zugegeben und bei 30°C weitere 10 Minuten gerührt.

### Beispiel 7

### Lackemulsion aus Beispiel 5

Es wird wie in Beispiel 6 verfahren, doch werden statt 97,5 T des Melaminharzes 87,5 T einer 70 %igen Lösung in n-Butanol eines Vernetzers auf Basis 2,4,6-Tris(methoxycarbonyl-amino)-1,3,5-triazin zugefügt.

### Lacktechnischer Vergleich

Die Lacke aus den Beispielen 2, 3, 6 und 7 wurden auf ein 20 cm x 30 cm großes, mit schwarzem Kataphoresetauchlack beschichtetem Gradientenblech mit einem 150 µm Rakel aufgezogen.

Es wurde zunächst 5 Minuten bei Raumtemperatur getrocknet, anschließend 10 Minuten bei 80°C vorgeliert und anschließend bei 140°C eingebrannt.

### Ergebnisse:

| Test | 2 Vergleich | 3 Vergleich | 6 Vergleich | 7 |
|---|---|---|---|---|
| Schichtdicke im eingebrannten Zustand | 45 µm | 39 µm | 40 µm | 43 µm |
| Pendelhärte nach König (Schwingungen) | 131 | 101 | 93 | 144 |
| MEK-Rub (Doppelhübe) | >50/<100 | >75 ab 50 starke Erweichung | >75 ab 75 leichte Erweichung | >100 |
| Fülle/Glanz | hohe Brillanz | leicht matt | glänzend, aber wenig brillant | sehr hohe Brillanz |
| Läufergrenze | 40 µm | < 39 µm | < 40 µm | > 43 µm |
| Lagerstabilität (40°C) | > 4 Wochen | < 2 Wochen | <2 Wochen | >4 Wochen |

Die Lacke aus den Tests 2 und 7 zeichnen sich durch wesentlich höhere Brillanz, bessere Chemikalienbeständigkeit, höhere Lagerstabilität, höhere Pendelhärte und bessere Ablaufsicherheit aus.

Besonders vorteilhaft ist der Lack aus dem Test 7, der in allen durchgeführten Prüfungen die besten Resultate zeigt.

## Patentansprüche

1. Verfahren zur Lackierung eines Substrats, bei dem auf ein Substrat, das vorbeschichtet sein kann, eine Decklackschicht oder eine Basislackschicht und darüber eine Klarlackschicht aufgetragen und eingebrannt werden, **dadurch gekennzeichnet, daß** als Decklackschicht, als Basislackschicht und/oder Klarlackschicht ein wäßriges Überzugsmittel aufgetragen wird, das neben gegebenenfalls vorhandenen lacküblichen Additiven eine von blockiertem Polyisocyanat freie wäßrige Bindemittelzusammensetzung enthält, wobei die Bindemittelzusammensetzung enthält:
| | | |
|---|---|---|
| A) | 10 bis 85 Gew.-% | eines oder mehrerer hydroxyfunktioneller (Meth)acryl-Copolymerisate, |
| B) | 85 bis 10 Gew.-% | eines oder mehrerer hydroxyfunktioneller Polyester, |
| C) | 0 bis 40 Gew.-% | eines oder mehrerer von A) und B) unterschiedlicher hydroxyfunktioneller Bindemittel, |
| D) | 5 bis 40 Gew.-% | eines oder mehrerer Triazin-triscarbamate der allgemeinen Formel |
| | C₃N₃(NHCOOR)₃ worin die Reste R, die gleich oder verschieden sein können C₁ bis C₂₀-Alkyl, C₆ bis C₂₀-Aryl und/oder C₇ bis C₂₀-Aralkyl bedeuten; | |
| E) | 0 bis 40 Gew.-% | eines oder mehrerer Melamin- und/oder Phenoplastharze; |
wobei die Summe der Komponenten A) bis E) sich jeweils 100 Gew.-% ergänzt,
und wobei mindestens 50 Gew.-% der (Meth)acryl-Copolymerisate, bezogen auf die Gesamtmenge der Komponente A) in Gegenwart von einem oder mehreren der hydroxyfunktionellen Polyester, entsprechend mindestens 20 Gew.-% der Gesamtmenge der Komponente B), hergestellt worden sind.

2. Verfahren nach Anspruch 1, **dadurch gekennzeichnet, daß** die Überzugsschichten bei Temperaturen von 80 bis 150°C eingebrannt werden.

3. Verfahren nach Anspruch 1 oder 2, **dadurch gekennzeichnet, daß** als hydroxyfunktionelles Bindemittel der Komponente C) Poly(meth)acrylat, Polyurethan, Polyether, Polyester oder Polyester-modifiziertes Poly(meth)acrylat, jeweils hydroxyfunktionell eingesetzt wird.

4. Verfahren nach einem der vorhergehenden Ansprüche, **dadurch gekennzeichnet, daß** die (Meth)acryl-Copolymeren A) ein Zahlenmittel der Molmasse (Mn) von 1000 bis 10000, eine OH-Zahl von 30 bis-300 mg KOH/g und eine Säurezahl von 0 bis 60 mg KOH/g aufweisen.

5. Verfahren nach einem der Ansprüche 1 bis 4, **dadurch gekennzeichnet, daß** die Polyesterharze B) ein Zahlenmittel der Molmasse (Mn) von 200 bis 5000, eine OH-Zahl von 30 bis 450 mg KOH/g und eine Säurezahl von 0 bis 60 mg KOH/g aufweisen.

6. Verfahren nach einem der Ansprüche 1 bis 5, **dadurch gekennzeichnet, daß** die verwendeten Überzugsmittel pigmenthaltige Decklacke sind.

7. Verfahren nach einem der Ansprüche 1 bis 5, **dadurch gekennzeichnet, daß** die verwendeten Überzugsmittel pigmentfreie oder transparente Pigmente und/oder Farbstoffe enthaltende Klarlacke sind.

8. Verfahren nach einem der Ansprüche 1 bis 7, **dadurch gekennzeichnet, daß** es bei der Mehrschichtlackierung von Kraftfahrzeugen und deren Teilen durchgeführt wird.

9. Kraftfahrzeuge und deren Teile, die eine nach dem Verfahren eines der Ansprüche 1 bis 7 aufgebrachte Mehrschichtlackierung aufweisen.

## Claims

1. Process for lacquering a substrate, in which a coating lacquer layer or a base lacquer layer followed by a clear lacquer layer are applied to and stoved on a substrate that may be precoated, **characterised in that** as coating lacquer layer, as base lacquer layer and/or clear lacquer layer an aqueous coating agent is applied that contains, in addition to lacquer-conventional additives that are optionally present, an aqueous binder composition free from blocked polyisocyanate, the said binder composition containing:
| | | |
|---|---|---|
| A) | 10 to 85 wt.% | of one or more hydroxyfunctional (meth)acrylic copolymers, |
| B) | 85 to 10 wt.% | of one or more hydroxyfunctional polyesters, |
| C) | 0 to 40 wt.% | of one or more hydroxyfunctional binders different from A) and B), |
| D) | 5 to 40 wt.% | of one or more triazine triscarbamates of the general formula C₃N₃(NHCOOR)₃ |
| | wherein the radicals R, which may be identical or different, denote C₁-C₂₀-alkyl, C₆-C₂₀-aryl and/or C₇-C₂₀-aralkyl, | |
| E) | 0 to 40 wt.% | of one or more melamine and/or phenoplast resins, |
wherein the sum of the components A) to E) in each case totals 100 wt.%,
and wherein at least 50 wt.% of the (meth)acrylic copolymers referred to the total amount of the component A) have been produced in the presence of one or more of the hydroxyfunctional polyesters, corresponding to at least 20 wt.% of the total amount of the component B).

2. Process according to claim 1, **characterised in that** the coating layers are stoved at temperatures of 80° to 150°C.

3. Process according to claim 1 or 2, **characterised in that** as hydroxyfunctional binder of the component C) there is used poly(meth)acrylate, polyurethane, polyether, polyester or polyester-modified poly(meth)acrylate, in each case hydroxy-functionalised.

4. Process according to one of the preceding claims, **characterised in that** the (meth)acrylic copolymers A) have a number average molecular weight (Mₙ) of 1000 to 10,000, an OH number of 30 to 300 mg KOH/g, and an acid number of 0 to 60 mg KOH/g.

5. Process according to one of claims 1 to 4, **characterised in that** the polyester resins B) have a number average molecular weight (Mₙ) of 200 to 5000, an OH number of 30 to 450 mg KOH/g, and an acid number of 0 to 60 mg KOH/g.

6. Process according to one of claims 1 to 5, **characterised in that** the coating agents that are used are pigment-containing coating lacquers.

7. Process according to one of claims 1 to 5, **characterised in that** the coating agents that are used are pigment-free or transparent pigments and/or dye-containing clear lacquers.

8. Process according to one of claims 1 to 7, **characterised in that** the process is employed in the multilayer lacquering of vehicles and parts thereof.

9. Vehicles and their parts that have been subjected to a multilayer lacquering according to the process of one of claims 1 to 7.

## Revendications

1. Procédé pour le revêtement d'un substrat, dans lequel l'on applique sur un substrat pouvant être prérevêtu une couche de vernis de recouvrement ou une couche de vernis de base et par-dessus une couche de vernis clair-transparent et l'on cuit, **caractérisé en ce que** l'on applique, comme couche de vernis de recouvrement, comme couche de vernis de base et/ou comme couche de vernis clair-transparent, une composition aqueuse de revêtement, renfermant à côté des additifs usuels pour les vernis éventuellement présents, une composition aqueuse de liant sans polyisocyanate bloqué, la composition de liant contenant :
| | |
|---|---|
| A) 10 à 85 % en poids | d'un ou plusieurs copolymérisats (méth)acryliques ayant des groupes fonctionnels hydroxy, |
| B) 85 à 10 % en poids | d'un ou plusieurs polyesters ayant des groupes fonctionnels hydroxy, |
| C) 0 à 40 % en poids | d'un ou plusieurs liants ayant des groupes fonctionnels hydroxy différents de A) et B), |
| D) 5 à 40 % en poids | d'un ou plusieurs triazinetriscarbamates de formule générale C₃N₃(NHCOOR)₃ |
| où les restes R peuvent être identiques ou différents et représentent un alkyle en C₁ à C₂₀, un aryle en C₆ à C₂₀ et/ou un aralkyle en C₇ à C₂₀, | |
| E) 0 à 40 % en poids | d'une ou plusieurs résines de mélamine et/ou d'une ou plusieurs résines phénoplastes, |
la somme des composants A) à E) étant complétée à 100 % en poids, et au moins 50 % en poids des copolymérisats (méth)acryliques, rapporté à la quantité totale du composant A) étant préparés en présence d'un ou plusieurs des polyesters ayant des groupes fonctionnels hydroxy, correspondant à au moins 20 % en poids de la quantité totale du composant B).

2. Procédé selon la revendication 1, **caractérisé en ce que** les couches de revêtement sont cuites à des températures comprises entre 80 et 150°C.

3. Procédé selon la revendication 1 ou 2, **caractérisé en ce que** l'on utilise, comme liant ayant des groupes fonctionnels hydroxy du composant C), le poly(méth)acrylate, le polyuréthane, les polyéthers, les polyesters ou le poly(méth)acrylate modifié par des polyesters, tous ayant des groupes fonctionnels hydroxy.

4. Procédé selon l'une des revendications précédentes, **caractérisé en ce que** les copolymères (méth)acryliques A) présentent une masse moléculaire moyenne en nombre (Mn) comprise entre 1 000 et 10 000, un indice OH compris entre 30 et 300 mg KOH/g et un indice d'acide compris entre 0 et 60 mg KOH/g.

5. Procédé selon l'une des revendications 1 à 4, **caractérisé en ce que** les résines polyesters B) présentent une masse moléculaire moyenne en nombre (Mn) comprise entre 200 et 5 000, un indice OH compris entre 30 et 450 mg KOH/g et un indice d'acide compris entre 0 et 60 mg KOH/g.

6. Procédé selon l'une des revendications 1 à 5, **caractérisé en ce que** les compositions de revêtement utilisées sont des vernis de recouvrement contenant des pigments.

7. Procédé selon l'une des revendications 1 à 5, **caractérisé en ce que** les compositions de revêtement utilisées sont des vernis clair-transparents sans pigments ou contenant des pigments transparents et/ou des colorants.

8. Procédé selon l'une des revendications 1 à 7, **caractérisé en ce qu'**il est mis en oeuvre pour le revêtement multicouche de véhicules automobiles et des parties de ceux-ci.

9. Véhicules automobiles et des parties de ceux-ci, présentant un revêtement multicouche appliqué par le procédé selon l'une des revendications 1 à 7.
